# EUROPÄISCHE PATENTSCHRIFT

(11) **EP 0 807 680 B1**
(45) Veröffentlichungstag und Bekanntmachung des Hinweises auf die Patenterteilung: **29.12.2004**
(21) Anmeldenummer: 97107842.3
(22) Anmeldetag: 14.05.1997
(51) Int. Cl.: C12G 3/04

(54) **Kaffeefreie Getränke mit anregender Wirkung**
Stimulating coffee-free drink
Boisson stimulante sans café

(30) Priorität: 14.05.1996 DE 19619448
(43) Veröffentlichungstag der Anmeldung: 19.11.1997
(73) Patentinhaber: Eckes Spirituosen & Wein GmbH, 55268 Nieder-Olm (DE)
(72) Erfinder: Kolb, Erich, Dr., 55268 Nieder-Olm (DE); Habersam, Helmut, 55268 Nieder-Olm (DE); Simson, Ingrid, 55122 Mainz (DE)
(74) Vertreter: Luderschmidt, Schüler & Partner GbR

(56) Entgegenhaltungen:
- DE-A- 3 000 916
- DE-A- 4 430 149
- FR-A- 2 659 980
- US-A- 2 206 719
- "DEVELOPMENTS IN BEVERAGE ADDITIVES" FOOD TECHNOLOGY,US,INSTITUTE OF FOOD TECHNOLOGISTS. CHICAGO, Bd. 49, Nr. 9, 1. September 1995 (1995-09-01), Seiten 64-65,68-70,72, XP000530189 ISSN: 0015-6639
- JAGO, DAVID: "Dynamic new beverages. Thirsty work for formulators and marketers" THE WORLD OF INGREDIENTS, 3. April 1996 (1996-04-03), Seiten 8-11,13, XP000981790
- ANONYMOUS: "Energy saving in mineral water and soft drinks production" FOOD PROCESSING INDUSTRY, Bd. 49, Nr. 581, April 1980 (1980-04), Seiten 55-56, XP000981859

## Beschreibung

Die vorliegende Erfindung betrifft kaffeefreie alkoholreduzierte Getränke mit anregender Wirkung, die in ihrem Geschmacksprofil höherprozentigen Produkten ähnlich sind, enthaltend Wasser, Alkohol, Süßungsmittel, Fruchtund/oder Gewürzauszüge sowie übliche Hilfs- und Zusatzstoffe, sowie Verfahren zu ihrer Herstellung.

Der Genußwert eines Lebensmittels wird vor allem charakterisiert durch seine äußere Beschaffenheit sowie seinen Geruch und Geschmack, die mittels olfaktorischer, gustatorischer und haptischer Sinneseindrücke wahrgenommen werden (Koch: Getränkebeurteilung, Verlag Ulmer Stuttgart, 1986). Der Genußwert alkoholischer Getränke wird in großem Maße auch durch ihren Alkoholgehalt bestimmt. Gerade von jungen Leuten werden traditionelle Getränke mit hohem Alkoholgehalt jedoch häufig abgelehnt, und der Trend geht mehr in Richtung von Produkten mit niedrigerem Alkoholgehalt, ohne daß man auf den typischen Geschmack und die anregende Wirkung verzichten möchte.

Die Herausbildung der typischen Aromastoffe von destillierten alkoholischen Getränken, wie Weinbrand, Whisky, Rum, Korn, Steinobst-, Kernobst-, Beerenobst- oder Wurzelbrände wird durch die verwendeten Rohstoffe, den Stoffwechsel der Gärungsmikroorganismen, durch die Destillation und Reifung und bei einigen Produkten durch abrundende Zusätze beeinflußt. Die goldgelbe bis goldbraune Farbe und die charakteristischen Duft- und Aromastoffe von Weinbrand und Whisky werden durch die bei der Lagerung der Destillate in Eichenholzfässern extrahierten Farb- und Geschmacksstoffe mitbestimmt. Obwohl die Bedeutung des Eichenholzes für die Lagerung und Reifung von Weindestillaten seit altersher bekannt ist und zahlreiche Forschungsarbeiten sich mit der Aufklärung der zugrundeliegenden Mechanismen beschäftigt haben, sind die Erkenntnisse noch immer lückenhaft. Auch der Lagerung von Whisky wird ganz besondere Aufmerksamkeit geschenkt. Als Lagergefäße dienen hier hauptsächlich Holzfässer aus amerikanischer Eiche oder eichene Sherryfässer, die vorher zum Versand von Sherryweinen Verwendung fanden. Diese sind besonders geeignet, da sie dem eingelagerten Whisky einen typischen Charakter und den erwünschten Farbton verleihen. (H. Wüstenfeld, G. Haeseler: Trinkbranntweine und Liköre, Verlag Paul Parey, 1964).

Während der Reifung in Holzfässern sind deutliche Verluste durch Verdunstung nachweisbar, deren Umfang von verschiedenen Einflüssen abhängt. Das Holz hat das Bestreben, sich ständig bis zu einem gewissen Grad mit Flüssigkeit zu durchtränken. Im gleichen Maße wie diese nach außen abdunstet, wandern neue Anteile des Faßinhalts in die Faßwände nach, so daß der Diffusionsvorgang durch die Holzporen kontinuierlich verläuft. Die Höhe des Flüssigkeitsverlustes ist abhängig von der Beschaffenheit des Holzes, dessen Stärke, der verdunsteten Faßoberfläche, Temperatur und Feuchtigkeit des Lagerraums, dem Siedepunkt der eingelagerten Flüssigkeit sowie auch von der Molekülgröße der einzelnen Komponenten. Um diese bei der Lagerung und Reifung auftretenden Verluste so gering wie möglich zu halten, sind schon seit langem verschiedene Methoden der künstlichen Alterung bekannt, wobei auch eine Intensivierung der typischen goldbraunen Farbe angestrebt wird. Ein wesentliches Merkmal herkömmlicher Weinbrände und Whiskytypen ist daher ihre charakteristische Farbe, die auch durch die Lagerung und Reifung in Holzfässern mitbestimmt wird.

Durch Mischen von alkoholischen Getränken, wie z.B. Weinbrand, Cognac oder Whisky mit Cola-Getränken hergestellte Mischgetränke sind besonders bei jüngeren Verbrauchern populär. Derartige Getränke zeichnen sich durch eine charakteristische mittel- bis dunkelbraune Farbe aus, die einerseits durch den goldgelb bis braungelben Farbton der genannten Spirituosen und andererseits durch die typische Farbe von Cola-Getränken bestimmt wird. Die Getränke haben eine erfrischende und anregende Wirkung und werden in der Regel unmittelbar vor dem Verbrauch gemischt, wobei das Mischungsverhältnis großen Schwankungen unterliegt, je nachdem, ob ein überwiegend erfrischendes Getränk mit niedrigem Alkoholgehalt oder ein stärker alkoholisches Getränk gewünscht wird. Auch Mischungen anderer Spirituosen sowie von Bier und Wein mit coffeinhaltigen Limonaden, Kaffee oder Tee sind wegen ihrer belebenden Wirkung bekannt. Derartige Mischungen werden nicht nur als Kaltgetränke angeboten, sondern sind auch als alkoholhaltige Heißmisch-Getränke, z.B. Mischungen aus Weinbrand, Kaffee, Zucker und Sahne ("Rüdesheimer Kaffee") oder aus Irish Whisky, Kaffee, Zucker und Sahne ("Irish Coffee") bekannt.

Auszüge der Colanuß sind in Colalikören und als Abrundungsmittel in Bitterlikören enthalten. Unter Verwendung frisch gerösteter, nicht zu fein gemahlener Kaffeebohnen hergestellte Kaffee- oder Mokkaliköre sind ebenfalls schon lange bekannt. Die genannten Produkte zeichnen sich alle durch eine intensiv dunkelbraune Farbe und einen hohen Zuckergehalt aus.

Alkohol- und coffeinhaltige Getränke bzw. Kompositionen, aus denen solche Getränke hergestellt werden können, sind auch aus den folgenden Druckschriften bekannt.

Die US 2206719 offenbart ein Getränk, das mit Aktivkohle behandelte Bierwürze und Coca-Cola-Sirup enthält.

Die JP 61115478 beschreibt die Herstellung eines kaffeeextrakthaltigen Brandies, wobei zunächst Kaffeebohnen in Brandy getaucht werden, denen dann enzym- und süßungsmittelhaltige Zusatzstoffe zugesetzt werden. Die Getränke sollen einen milden Geschmack und eine erfrischende Wirkung besitzen.

In der JP 58138348 werden Lebensmittel und Getränke, wie z.B. Schinken, Käse, Würstchen, Honig, Mayonnaise, Sake, Essig, Wein, Whisky, Makkaroni, Corned Beef, Reisgebäck, Tomatenketchup, Butter und Fischpaste, denen Kaffee oder Tee zur Überwindung von Erschöpfung und Müdigkeit zugesetzt wird, beschrieben.

Aus der SU 1184512 ist die Herstellung eines Teekonzentrates mit hoher Löslichkeit und guter Farbstabilität zur Anreichung cognacähnlicher Getränke bekannt, gemäß welcher Tee extrahiert, filtriert, konzentriert, mit einer wäßrigen Alkohollösung vermischt, erhitzt, gekühlt, dekantiert, filtriert und mit Farbstoff vermischt wird.

Gemäß der JP 04051885 wird ein alkoholisches Kaffeegetränk dadurch hergestellt, daß man Kaffeebohnen mit einer wäßrigen Alkali- und/oder Erdalkalilösung kocht und den dabei entstehenden Extrakt mit Alkohol und Süßungsmitteln mischt.

Die DE 43 31 437 A1 beschreibt eine Komposition zur Herstellung alkoholischer Getränke mit weinbrandähnlichem Geschmack und Alkoholgehalten von 20 bis 40 %vol., die durch Verwendung von ungelagertem, kupferblasenfrischem Weindestillat mit Rumdestillat bzw. einer Mischung aus Rumdestillaten und natürlichem Brandyaroma erhalten werden, sowie ein Verfahren zur Herstellung der alkoholischen Getränke.

Der Verbrauchertrend, insbesondere unter den jungen Leuten, geht in Richtung auf Produkte mit niedrigerem Alkoholgehalt, ohne jedoch auf das typische Geschmacksprofil höherprozentiger Produkte und die anregende Wirkung verzichten zu wollen.

Aufgabe der vorliegenden Erfindung ist daher die Bereitstellung eines alkoholischen Getränkes mit reduziertem Alkoholgehalt, dessen Geschmacksprofil herkömmlichen Produkten mit höheren Alkoholgehalten ähnlich ist und das eine anregende, belebende Wirkung besitzt.

Erfindungsgemäß wird diese Aufgabe mit einem Getränk gelöst, das einen Farbwert bis 0,1 besitzt, Coffein in einer Menge von 0,015 bis 0,2 % (Gew./Vol.) enthält und einen Alkoholgehalt von 5 bis 36 %vol. aufweist, wobei braune Färbungen, wie die braune Kaffee- oder Colafarbe ausgenommen sind. Das Getränk weist erfindungsgemäß eine Farbe von wasserhell bis leicht gefärbt auf, d.h. es ist nicht intensiv gefärbt.

In den erfindungsgemäßen Getränken beträgt der Alkoholgehalt vorzugsweise 10 bis 30 %vol. und insbesondere 15 bis 25 %vol., während der Coffeingehalt 0,025 bis 0,1 % (Gew.-/Vol.) beträgt. Der Farbwert beträgt vorzugsweise weniger als 0,1.

Die erfindungsgemäßen alkoholreduzierten Getränke besitzen eine anregende Wirkung und sind in ihrem Geschmacksprofil Produkten mit höherem Alkoholgehalt ähnlich.

Erfahrungsgemäß weisen alkoholhaltige Getränke mit einem Alkoholgehalt > 36 %vol. einen ausgeprägten alkoholischen Geschmack und eine kurz anhaltende brennend-wärmende Alkoholschärfe auf, während alkoholfreie coffeinhaltige Getränke sich - abhängig von der Höhe des Coffeingehaltes - durch einen mehr oder weniger stark ausgeprägten bitteren Geschmack auszeichnen. Erfindungsgemäß wurde überraschend gefunden, daß erfindungsgemäße duft- und geschmacksstoffreiche alkoholische Getränke, deren Alkoholgehalt gegenüber herkömmlichen Produkten reduziert ist, dann ein unerwartet volles und harmonisches Geschmacksprofil aufweisen, das dem herkömmlicher Getränke mit höherem Alkoholgehalt ähnelt, wenn die Verminderung des Alkoholgehaltes mit einer Erhöhung des Coffeingehaltes einhergeht, wobei die Wahrnehmung eines zu erwartenden bitteren Geschmackes deutlich reduziert ist, während ein ausgeprägtes brennendwärmendes Mundgefühl erhalten bleibt.

In den erfindungsgemäßen Getränken sind der Alkoholgehalt und der Coffeingehalt aufeinander abgestimmt, wobei innerhalb der angegebenen Bereiche für Alkohol und Coffein mit abnehmendem Alkoholgehalt der Coffeingehalt erhöht wird und mit steigendem Alkoholgehalt der Coffeingehalt reduziert wird.

Die erfindungsgemäßen Getränke können, ausgenommen eine braune Färbung, einen Farbwert von bis maximal 0,1, vorzugsweise von weniger als 0,1 aufweisen. Dieser bei Raumtemperatur (20°C) gemessene Farbwert ist definiert als die Extinktion bei einer Wellenlänge von 535 nm und einer Schichtdicke von 2 cm. Die erfindungsgemäßen Getränke sind blank, können jedoch auch eine schwache Trübung, deren Intensität 500 NTU, vorzugsweise 50 NTU und insbesondere 30 NTU nicht überschreitet, aufweisen. Vorzugsweise sind die erfindungsgemäßen Getränke jedoch blank. Die Trübungsmessung erfolgt in einem Nephelometer, mit dem in vier Meßbereichen Trübungen von 0,001 bis 1999 Trübungseinheiten (NTU) im Vergleich zu Formazin-Standardlösungen gemessen werden können. Das Prinzip der Messung beruht darauf, daß ein Lichtstrahl durch die Probe geleitet wird und mit Photozellen das im Winkel von 90° gestreute Licht, das vorwärts gestreute Licht und das Durchlicht gemessen wird. Auf elektronischem Wege wird das Verhältnis des Ausgangs der Photozelle für die 90°-Messung zur Summe der Ausgänge der anderen beiden Photozellen gebildet und so eine gute Linearität erreicht und der Einfluß der Farbe ausgeschaltet. Durch die Konstruktion des optischen Systems ist das Streulicht zu vernachlässigen.

Als Alkohole bzw. alkoholhaltige Bestandteile geeignet sind erfindungsgemäß z.B. gereifte Weindestillate, Destillate aus vergorenem Kernobst, Steinobst und/oder Beerenobst, Tresterbrand, Hefebrand, Getreidebrand, Ethylalkohol anderen landwirtschaftlichen Ursprungs und/oder Alkohol aus der alkoholischen Gärung von Fruchtsäften. Geeigneterweise werden die erfindungsgemäßen Getränke entweder unter alleiniger Verwendung von gereiften Weindestillaten oder unter Verwendung der gereiften Weindestillate im Gemisch mit einem oder mehreren der anderen Alkohole hergestellt. Einzeln oder in Mischungen sind außerdem auch Brände z.B. aus Kernobst, Steinobst und/oder Beerenobst, Tresterbrand, Hefebrand und Getreidebrand geeignet. Die Mitverwendung von Alkohol anderen landwirtschaftlichen Ursprungs ist ebenfalls möglich. Dazu gehört beispielsweise der in landwirtschaftlichen Brennereien aus Kartoffeln gewonnene Kartoffelsprit. Daneben können auch eine Reihe anderer stärkehaltiger Rohstoffe als Ausgangsmaterialien herangezogen werden. Auch Alkohol aus der alkoholischen Gärung von Fruchtsäften kann zugesetzt werden, wobei gegebenenfalls eine vorherige Entfärbung und/oder Entsäuerung dieser Gärungsprodukte vorgenommen werden muß. Insbesondere bevorzugt ist jedoch die alleinige Verwendung von gereiften Weindestillaten als Alkohol in den erfindungsgemäßen Getränken.

Gereiftes Weindestillat muß zur Ausbildung der charakteristischen Duft- und Geschmacksstoffe in Holzfässern, z.B. in Fässern aus Eschenholz (Fraxinus excelsior) und/oder in geeigneten Großraumbottichen anderer Holzarten gelagert werden. Für die erfindungsgemäßen Getränke geeignet sind Destillate, deren Farbintensität, bezogen auf einen Alkoholgehalt von 75 %vol., bei einer Wellenlänge von 380 nm in einer Schichtdicke von 2 cm die Extinktion von 0,35 nicht überschreitet.

Coffein kann als reines Coffein, z.B. in Form des in der Entcoffeinierung von Kaffee anfallenden Coffeins, und/oder in Form von coffeinhaltigen wäßrigen und/oder alkoholischen pflanzlichen Extrakten, z.B. Guaraná-Extrakt, Tee-Extrakt oder Colanuß-Extrakt - ausgenommen Kaffee-Extrakt - verwendet werden. Ebenso können Mischungen dieser Extrakte eingesetzt werden. Bei starker Eigenfärbung der Extrakte kann in Abhängigkeit vom gewünschten Coffeingehalt der erfindungsgemäßen Getränke gegebenenfalls eine Entfärbung der Extrakte vorgenommen werden. Vorzugsweise wird erfindungsgemäß Coffein als reines Coffein verwendet.

Zur geschmacklichen Abrundung können den erfindungsgemäßen Getränken wäßrige und/oder alkoholische Frucht- und/oder Gewürzauszüge zugesetzt werden. Geeignet sind z.B. wäßrige und/oder alkoholische Auszüge von Gewürzen, wie beispielsweise Nelken, Muskatnüssen, Pfeffer, Koriander, Zimt, Ingwer, Vanille sowie Auszüge und Extrakte von Früchten, wie z.B. Orangen, Zitronen, Limetten, Pflaumen, Pfirsichen, Kirschen, Feigen, Mangos, Mandeln und/oder Nüssen. Diese Auszüge werden gegebenenfalls nach ihrer Herstellung zur Ausbildung typischer Aromen vor der Weiterverarbeitung bzw. Verwendung geeigneterweise mindestens zwei Wochen, vorzugsweise vier Wochen, bei geeigneter Temperatur, z.B. 4° bis 10°C gelagert. Zur sensorischen Abrundung sind ebenfalls Zusätze von Fruchtsäften und/oder Fruchtsaftkonzentraten und/oder von natürlichen und/oder naturidentischen handelsüblichen Aromen, z.B. Brandyaroma, geeignet. Auch Weinhefeöl, das durch Abdampfen mit direktem Wasserdampf und anschließender Rektifikation aus Weinhefe gewonnen wird und in sehr großer Verdünnung einen lieblich-blumigen Geschmack und bei etwas höherer Dosierung einen leicht seifigen Charakter besitzt, ist zur weiteren Abrundung gut geeignet.

Die erfindungsgemäßen Getränke können auch färbende Zusätze enthalten. Zur Färbung können Lebensmittelfarbstoffe, wie z.B. Tartrazin, Patentblau, Azorubin und dergleichen, und/oder färbende Lebensmittel, wie z.B. Hibiscus-, Gardenia-, Kurkuma- und Zitrusölextrakte, verwendet werden.

Als Süßungsmittel können alle in der Getränkeindustrie üblicherweise verwendeten Zucker, z.B. Saccharose, Fructose, Glucose, Invertzuckersirup, Glucosesirup, hochfructosehaltiger Glucosesirup, Zuckeraustauschstoffe, wie Sorbit, Mannit sowie Süßstoffe, wie Aspartam, Acesulfam K, Sucralose, Saccharin und Cyclamat einzeln oder auch in Mischung eingesetzt werden. Vorzugsweise beträgt der Süßungsmittelzusatz weniger als 10 % (Gew.-/Vol.), höhere Zugaben sind jedoch ebenfalls möglich.

Gegebenenfalls kann durch geringe Zusätze von Frucht- oder Genußsäuren, wie z.B. von Äpfelsäure, Milchsäure, Phosphorsäure, Weinsäure und Zitronensäure eine geschmackliche Abrundung und/oder eine erfrischende Wirkung erzielt werden. Vorzugsweise beträgt der Zusatz weniger als 0,5 % (Gew./Vol.) und insbesondere weniger als 0,2 % (Gew./Vol.). Die erfrischende und anregende Wirkung kann durch die Zugabe von CO₂ verstärkt werden. Die Höhe des CO₂-Zusatzes kann variieren und z.B. 0,4 bis 4 g/l, vorzugsweise jedoch weniger als 2,5 g/l betragen.

Die Herstellung der erfindungsgemäßen Getränke erfolgt geeigneterweise derart, daß man in einem Mischtank eine Teilmenge der rezepturgemäßen Wassermenge vorlegt. Anschließend werden Süßungsmittel und gegebenenfalls wäßrige Frucht- und/oder Gewürzauszüge sowie gegebenenfalls weitere wasserlösliche Zusätze, wie Fruchtsäfte und/oder Fruchtsaftkonzentrate, und/oder Genußsäuren (Fruchtsäuren) zugesetzt. Die erhaltene Mischung wird bis zur vollständigen Auflösung aller Komponenten gerührt, wobei die Einschaltung und die Drehzahl des Rührwerks so geregelt werden müssen, daß ein Lufteinschlag vermieden wird.

In einer weiteren Teilmenge Wasser wird das Coffein, entweder in Reinform und/oder in Form von coffeinhaltigen Extrakten, gelöst und die erhaltene Lösung mit der wie vorstehend beschrieben hergestellten Lösung vereinigt. Der so erhaltenen Mischung werden die alkoholischen Bestandteile, z.B. gereiftes Weindestillat und/oder Brände, wie z.B. Obstbrände, Getreidebrände oder Ethylalkohol anderen landwirtschaftlichen Ursprungs, auch in Mischung, zugesetzt. Bei Verwendung von alkoholischen Frucht- und/oder Gewürzauszügen werden diese Auszüge geeigneterweise in einer Teilmenge eines alkoholischen Bestandteils gelöst und die dabei erhaltene Lösung wird der alkoholhaltigen Mischung zugesetzt. Anschließend wird die Mischung mit der Restmenge Wasser versetzt. Die erhaltene Mischung wird unter Vermeidung von Lufteinschlag so lange gerührt, bis ein homogenes Produkt erhalten wird.

Das so hergestellte Getränk kann entweder direkt in geeignete Gebinde abgefüllt werden oder gegebenenfalls vor oder nach der Abfüllung einer Haltbarmachung unterworfen werden. Dies kann auf physikalischem Wege, vorzugsweise durch eine Wärmebehandlung nach den aus dem Stand der Technik bekannten Verfahren, wie beispielsweise eine Kurzzeiterhitzung mit anschließender Heiß- oder Kaltsterilabfüllung oder durch Pasteurisation, z.B. in einem Tunnelpasteur, erfolgen. Auch andere bekannte Verfahren der Haltbarmachung, z.B. durch Hochdrucksterilisation, Sterilfiltration oder auch durch Einsatz geeigneter lebensmittelrechtlich zulässiger Konservierungsmittel können angewandt werden. Erfindungsgemäße Produkte, deren Alkoholgehalt weniger als 12 %vol. beträgt, werden vorzugsweise einer Haltbarmachung unterzogen, um mikrobiologische Veränderungen während der Lagerung zu vermeiden. Diese Haltbarmachung kann in der vorstehend beschriebenen Weise vorgenommen werden.

Extrakte oder farbintensive Zusätze können gegebenenfalls ganz oder teilweise entfärbt werden.

Eine Entfärbung der Extrakte und anderer farbintensiver Zusätze kann nach den in der Getränke-Industrie üblichen Verfahren, z.B. mit Aktivkohle durchgeführt werden. Dazu kann pulverförmige Aktivkohle im Einrührverfahren oder im Verfahren der Schichtfiltration angewendet werden.

Beim Einrührverfahren wird das Adsorptionsmittel mit der zu entfärbenden Lösung in einem Rührbehälter, gegebenenfalls bei erhöhter Temperatur, verrührt und anschließend in einer Filterpresse abfiltriert. Bei der Schichtfiltration erzeugt man zunächst durch Anschwämmen auf dem Filter eine Adsorptionsmittelschicht von ca. 1 cm Dicke, durch die die zu entfärbende Lösung hindurchgedrückt wird. Bei sehr feinen Pulvern ist zur Verminderung des Filterwiderstandes die Verwendung von Filterhilfsmitteln zweckmäßig. Hierzu eignet sich besonders Kieselgur, das man dem Adsorptionsmittel in einer Menge von 50 bis 100 %, bezogen auf das Adsorbens, zumischt. Statt der Pulverkohle können auch sogenannte Entfärbeharze verwendet werden, wobei es sich um stark vernetzte, makroporöse Anionenaustauscher handelt.

Desgleichen können für die erfindungsgemäßen Getränke säurehaltige Zusätze, wie z.B. Fruchtsäfte und/oder Fruchtsaftkonzentrate sowie die durch teilweise oder vollständige alkoholische Gärung aus Fruchtsaft und/oder Fruchtmark hergestellten Getränke, vor ihrer Zugabe gegebenenfalls ganz oder teilweise entsäuert werden. Diese Entsäuerung wird in der in der Fruchtsaft-Industrie üblichen Weise durchgeführt.

Verfahren zur Entfärbung und zum Entsalzen bzw. zur Entsäuerung werden z.B. in der EP 0 415 905 B1 und der EP 0 446 465 B1 beschrieben.

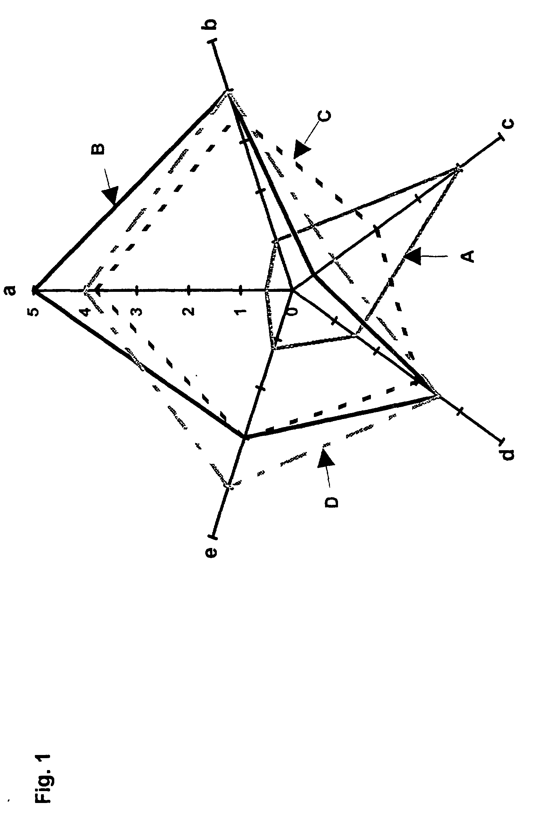

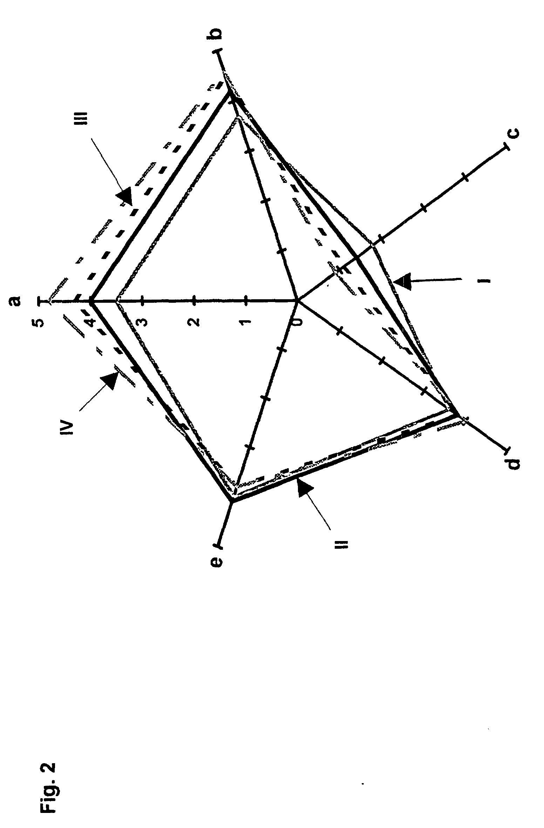

Figuren 1 und 2 stellen grafische Darstellungen der Ergebnisse der sensorischen Prüfung (Profilanalyse) für verschiedene Getränke unterschiedlicher Zusammensetzung dar.

Die sensorische Prüfung wird mittels einer speziellen Methode der beschreibenden sensorischen Prüfungen, der sogenannten Profilmethode durchgeführt, die im Detail zuerst von Cairncross und Sjöström 1950 beschrieben wurde (R. Neumann, P. Molnar: Sensorische Lebensmitteluntersuchung, Fachbuchverlag Leipzig, 1991). Das Ziel der Profilmethode besteht im allgemeinen darin, den Geschmack des zu analysierenden Produktes in seiner Komplexität mit allen Komponenten einschließlich der haptischen Empfindungen, die bei der Mundprobe wahrnehmbar sind, darzustellen. Mit der sensorischen Profilmethode werden alle wahrnehmbaren Geruchs- und Geschmackskomponenten sowie die Komponenten der Textur in der zeitlichen Reihenfolge ihrer Wahrnehmungen beschrieben. Gleichzeitig wird die Intensität jeder Komponente nach einer festgelegten und von den Prüfpersonen eingeprägten Intensitätsskala bestimmt.

Im vorliegenden Fall wird die Prüfung auf das geschmackliche Profil konzentriert. Dazu werden in einem ersten Schritt die Geschmackskomponenten definiert und die ermittelten Geschmackseindrücke auf Prüfblättern festgehalten. In einem zweiten Schritt wird das sogenannte Rohprofil gewonnen und aus der Häufigkeit der ermittelten Komponenten werden als Grundprofil die Geschmackseindrücke bitter, brennend, wärmend, voll-aromatisch und harmonisch-abgerundet als relevant für die Bewertung der Getränke abgeleitet. Für die quantitative Analyse wird eine allgemeine Intensitätsskala verwendet:
- 0: nicht wahrnehmbar
- 1: sehr schwach
- 2: schwach
- 3: mittelstark
- 4: stark
- 5: sehr stark

Aus den ermittelten Einzelwerten für die Geschmackseindrücke wärmend (a), brennend (b), bitter (c), voll-aromatisch (d) und harmonisch-abgerundet (e) werden die arithmetischen Mittelwerte gebildet.

In Figur 1 sind mit A, B, C und D die jeweiligen Getränke gemäß Beispiel 1 bezeichnet und mit a, b, c, d und e die Geschmackseindrücke wärmend (a), brennend (b), bitter (c), voll-aromatisch (d) bzw. harmonisch-abgerundet (e), wobei die Angaben 0, 1, 2, 3, 4 und 5 für die jeweiligen Geschmackseindrücke die vorstehend angegebene allgemeine Intensitätsskala für die quantitative Analyse darstellen.

In Figur 2 sind mit I, II, III und IV die jeweiligen, in Beispiel 2 hergestellten erfindungsgemäßen Getränke mit verschiedenen Alkohol- und Coffeingehalten bezeichnet, während a, b, c, d und e und die Angaben 0, 1, 2, 3, 4 und 5 die gleiche Bedeutung haben, wie sie für Figur 1 angegeben sind.

Die nachfolgenden Beispiele dienen der weiteren Erläuterung der Erfindung.

### Beispiel 1

Aus Wasser, Invertzuckersirup, 1,25 ml/l einer aus Aprikosen-, Orangen-, Bittermandel-, Ingwer- und Vanillearoma bestehenden Aromamischung sowie gereiftem Weindestillat (Alkoholgehalt 75 % Vol., Farbwert 0,320 (Extinktion bei 380 nm, Schichtdicke 2 cm)) und/oder Coffein wurden Getränke mit folgender Zusammensetzung hergestellt:

| **Getränk** | **A** | **B** | **C** | **D** |
|---|---|---|---|---|
| Gehalt an: | | | | |
| Coffein % (Gew./Vol.) | 0,055 | 0 | 0,055 | 0,055 |
| Alkohol %vol. | 0 | 36 | 20 | 20 |
| Gesamtzucker % (Gew./Vol.) | 6 | 3 | 3 | 6 |
| Aussehen: Wasserhelle, schwach opaleszierende Flüssigkeit Farbwert: 0,01 Trübung : 0,015 NTU | | | | |

Gemäß der vorstehend beschriebenen Methode wurde von zehn Verkostern eine Profilanalyse der Getränke A, B, C und D durchgeführt.

Aus den bei der Prüfung ermittelten Einzelwerten für die Geschmackseindrücke wärmend (a), brennend (b), bitter (c), voll-aromatisch (d) und harmonisch-abgerundet (e) wurden die arithmetischen Mittelwerte gebildet. Das Ergebnis dieser Prüfung ist in Figur 1 grafisch dargestellt. Die erhaltenen Ergebnisse zeigen, daß die Getränke C und D (d.h. die erfindungsgemäßen Getränke), verglichen mit den Getränken A und B, die gewünschten vorteilhaften Eigenschaften aufweisen, d.h. daß sie praktisch nicht bitter sind, aber gleichzeitig wärmend, brennend, voll-aromatisch und harmonisch abgerundet sind.

### Beispiel 2

Aus Wasser, Invertzuckersirup, Kornbrand, Coffein und 7,5 ml/l einer aus Passionsfrucht-, Pfirsich-, Mango-, Lulo-, Honigaroma und japanischem Pfefferauszug bestehenden Aromamischung wurden wasserhelle Getränke mit einem Farbwert von 0,012 und einem Gesamtzuckergehalt von 8,8 % (Gew./Vol.) hergestellt, die folgende Alkohol- und Coffeingehalte aufwiesen:

| **Getränk** | **Alkoholgehalt %vol.** | **Coffeingehalt % (Gew.-/Vol.)** |
|---|---|---|
| I | 12 | 0,085 |
| II | 18 | 0,053 |
| III | 25 | 0,028 |
| IV | 36 | 0,005 |

Gemäß der vorstehend beschriebenen Methode für die sensorische Prüfung wurde eine Profilanalyse der Getränke I bis IV durchgeführt, deren Ergebnis in Figur 2 dargestellt ist. Dabei wurde festgestellt, daß, wie aus Figur 2 ersichtlich ist, alle getesteten Getränke I bis IV ein ähnliches Geschmacksprofil aufwiesen.

### Beispiel 3

1 l des gemäß Beispiel 1 hergestellten Getränkes D wurde auf ca. 4°C abgekühlt, in eine luftdicht verschließbare Glasflasche abgefüllt, mit 0,8 g Trockeneis (Kohlendioxid) versetzt, sofort verschlossen und vorsichtig so lange geschüttelt, bis das Trockeneis vollständig gelöst war. Bei der Verkostung dieses Getränkes im Vergleich zu dem gemäß Beispiel 1 hergestellten Getränk D wurde trotz des relativ geringen Kohlendioxidzusatzes bereits ein spürbar verstärkter erfrischender Geschmack festgestellt.

### Beispiel 4

Zur Herstellung eines erfindungsgemäßen wasserhellen alkoholischen Getränkes mit weinbrandtypischem Charakter und einem Farbwert von 0,01 wurde Guaraná-Extrakt (paulinia cupana H.B.K.) verwendet. Der Guaranä-Extrakt wies folgende durchschnittliche Zusammensetzung auf:

| | |
|---|---|
| Aussehen | durchsichtige Flüssigkeit |
| Farbe | braun bis braunrötlich |
| Geruch und Geschmack | charakteristisch |
| Ethanolgehalt | 40 %vol. |
| Dichte | 0,960 |
| Trocknungsrückstand | 10 % |
| Refraktionsindex | 1,370 |
| pH (25 °C) | 6,0 |
| Coffeingehalt | 5,5 % |
| Löslichkeit | löslich in Wasser und Ethanol |
| Trübheit | ohne |
| Tanningehalt | 0,8 % |

Zur Entfärbung des intensiv gefärbten Guaraná-Extraktes wurden 10,8 ml des Guaraná-Extraktes mit 200 ml entmineralisiertem Wasser und 0,52 g Aktivkohle gemischt und eine Stunde gerührt. Nach ca. 30minütiger Standzeit, in der sich die Kohle weitgehend abgesetzt hatte, wurde die Mischung durch ein Schleicher & Schüll Faltenfilter 529 B 1/2 filtriert. Das Filtrat wurde mit 261 ml des in Beispiel 1 beschriebenen Weindestillates, 0,03 ml einer Mischung aus einem Teil weißem Weinhefeöl und 9 Teilen Ethanol, 27,5 g Invertzuckersirup mit einer Trockensubstanz von 72,7 % und 508 ml entmineralisiertem Wasser versetzt und bis zur vollständigen Durchmischung gerührt. Das erhaltene wasserhelle Getränk wies einen Alkoholgehalt von 19,5 %vol. und einen Coffeingehalt von 0,057 % (Gew./Vol.) auf. Das verwendete Weinhefeöl hatte folgende Kennzahlen:

| | |
|---|---|
| Dichte (25°C) | 0,867 |
| Säurezahl | 43 |
| Esterzahl | 235 |
| Hexansäurethylester | 0,1 % |
| Octansäureethylester | 5 % |
| Decansäureethylester | 30,5 % |
| Dodecansäureethylester | 19,4 % |
| Tetradecansäureethylester | 4,3 % |
| Hexadecansäureethylester | 4,9 % |
| Octadecansäureethylester | 0,3 % |

### Beispiel 5

Zur Herstellung von einem Liter eines wasserhellen alkoholischen Getränkes mit einem Alkoholgehalt von ca. 25 %vol., einem Coffeingehalt von 0,045 % (Gew.-/Vol.) und einem Farbwert von 0,065 wurden 50 ml eines wäßrigen Extraktes aus Ingwer und Feigen mit 200 ml entmineralisiertem Wasser gemischt. Anschließend wurden 0,45 g Coffein zugesetzt, die zuvor in 100 ml entmineralisiertem Wasser gelöst worden waren. Zu dieser Mischung wurden 555,6 ml Grappa mit einem Alkoholgehalt von 45 %vol., 0,5 ml Citrus-Abrundungsaroma und die restliche Wassermenge von 93 ml zugesetzt und so lange gerührt, bis eine homogene Mischung vorlag.

### Beispiel 6

Zur Herstellung von 10 l eines wasserhellen alkoholhaltigen Getränkes mit ausgeprägtem Kirscharoma und Kirschgeschmack und einem herkömmlichen höherprozentigen Getränken ähnlichen Mundgefühl wurden 0,8 l des in Beispiel 1 beschriebenen Weindestillates, 2,5 l Kirschwasser mit einem Alkoholgehalt von 40 %vol., 9,5 g Coffein, 6 g Äpfelsäure, 5,4 g wasserfreie Zitronensäure, 1,01 kg Invertzuckersirup mit 72,7 Gew.-% Trockensubstanzgehalt, 2,5 ml einer Kirsch-Bittermandel-Rumaromamischung und 5,94 l entmineralisiertes Wasser verwendet. Das Getränk wies einen Alkoholgehalt von 15 %vol., einen Coffeingehalt von 0,095 % (Gew./Vol.), einen Farbwert von 0,009 und einen Gesamtzuckergehalt von 7,3 % (Gew./Vol.) auf.

### Beispiel 7

10 l eines schwach roten alkoholischen Getränkes mit ausgeprägtem Kirscharoma und Kirschgeschmack und einem herkömmlichen höherprozentigen Getränken ähnlichen Mundgefühl wurden unter Verwendung von 0,8 l des in Beispiel 1 beschriebenen Weindestillates, 1,5 l Kirschwasser mit einem Alkoholgehalt von 40 %vol., 4,05 l eines aus Süßkirschen hergestellten Kirschweins, der einen Alkoholgehalt von 9,7 %vol. und einen Restzuckergehalt von 4,7 % (Gew./Vol.) aufwies, 9,5 g Coffein, 1,01 kg Invertzuckersirup mit 72,7 Gew.-% Trockensubstanzgehalt, 2,5 ml einer Kirsch-Bittermandel-Rumaromamischung und 2,89 l entmineralisiertem Wasser hergestellt. Das erhaltene Getränk wies einen Alkoholgehalt von 15 %vol. und einen Coffeingehalt von 0,095 % (Gew./Vol.) und einen Farbwert von 0,09 auf.

Der verwendete Kirschwein wurde zuvor durch eine Kohleschönung weitgehend entfärbt. Dazu wurden dem Kirschwein 4 g Aktivkohle zugesetzt und das Gemisch wurde eine Stunde gerührt. Das Gemisch wurde dann vier Stunden stehengelassen, bis sich die Kohle weitgehend abgesetzt hatte. Anschließend wurde wie in Beispiel 4 beschrieben filtriert.

### Beispiel 8

Unter Verwendung von Wasser, Neutralalkohol, Korn, wasserfreier Zitronensäure, Colanuß-Extrakt und einer Mischung aus Ingwer-, Limettenund Orangenaroma wurde ein Getränk mit einem Farbwert von 0,008 und einem Alkoholgehalt von 18 %vol. und einem Coffeingehalt von 0,065 % (Gew./Vol.) mit vollem typischen Geschmack und ausgeprägtem Schärfeprofil erhalten. Zur Herstellung von 1 l des Getränkes wurden 103,6 ml Neutralalkohol, 250 ml Korn, 2,5 g wasserfreie Zitronensäure, 0,62 g Colanuß-Extrakt, 0,35 g einer Süßungsmittelmischung, bestehend aus den Süßstoffen Acesulfam K, Aspartam und Saccharinnatrium, und 1,15 ml der angegebenen Aromamischung verwendet.

### Beispiel 9

Zur Herstellung von 100 Litern eines erfindungsgemäßen Getränkes wurden 30 l entmineralisiertes, entgastes Wasser (Restsauerstoffgehalt maximal 0,2 mg/l) mit 13,25 kg Invertzuckersirup (72,7 % Trockensubstanz) und 70 g in 5 l entmineralisiertem, entgastem Wasser vorgelöstes Coffein gemischt. Zu dieser Mischung wurden anschließend 26 l kohlegeschönter, teilentsäuerter Apfeldessertwein (Alkoholgehalt 12 %vol.), 5,5 l gereiftes Weindestillat (Alkoholgehalt 75 %vol.), 3,3 l Primasprit (Alkoholgehalt 96,5 %vol.), 0,67 l einer Apfel-, Zimt-, Vanille-Brandyaromamischung und die restlichen 19,95 l entmineralisiertes, entgastes Wasser gegeben. Die Aromamischung wurde vor der Zugabe in dem Primasprit vorgelöst. Der Ansatz wurde bis zur vollständigen Durchmischung gerührt, wobei ein Einschlagen von Luft zu vermeiden war. Im Anschluß wurde das Getränk im Plattenwärmeaustauscher auf 55 bis 60°C erwärmt und nach eine Heißhaltezeit von 30 Sekunden in vorgewärmte keimarme Flaschen gefüllt. Die Flaschen wurden verschlossen und anschließend sofort zurückgekühlt bis eine Produkttemperatur von ca. 20°C erreicht war.

Das wasserhelle Getränk wies einen Farbwert von 0,005, einen Alkoholgehalt von 10,5 %vol., einen Coffeingehalt von 0,07 % (Gew./Vol.), einen Gesamtzuckergehalt von 9,8 % (Gew.-/Vol.), einen Gesamtsäuregehalt von 0,20 % (Gew./Vol.) und einen fruchtig-belebenden, voll-aromatischen, leicht brennenden, wärmenden und kaum wahrnehmbaren bitteren Geschmack auf.

### Beispiel 10

Zur Herstellung von 10 Litern eines grünen Getränkes mit einem Alkoholgehalt von 20 %vol., einem Coffeingehalt von 0,1 % (Gew.-/Vol.) und einem Farbwert von 0,056 wurden 2,1 kg Invertzuckersirup (72,7 % Trockensubstanz), 2,05 l Neutralalkohol (Alkoholgehalt 96,5 % vol), 10 g Coffein, 6,33 l entmineralisiertes Wasser, 19 mg einer Mischung aus Tartrazin und Patentblau und 20 ml einer Pfefferminz-Mentholaromamischung verwendet.

## Patentansprüche

1. Kaffeefreies Getränk mit anregender Wirkung, enthaltend Wasser, Alkohol, Süßungsmittel, Frucht- und/oder Gewürzauszüge sowie übliche Hilfs- und Zusatzstoffe, **gekennzeichnet durch** einen Farbwert bis 0,1, einen Coffeingehalt in einer Menge von 0,015 bis 0,2 % (Gew./Vol.) und einen Alkoholgehalt von 5 bis 36 %vol..

2. Getränk nach Patentanspruch 1, **dadurch gekennzeichnet, dass** der Alkoholgehalt 10 bis 30 %vol., vorzugsweise 15 bis 25 %vol. und der Coffeingehalt 0,025 bis 0,1 % (Gew./Vol.) beträgt.

3. Getränk nach einem Patentansprüche 1 oder 2, **dadurch gekennzeichnet, dass** der Gehalt an Süssungsmitteln maximal 10 % (Gew.-/Vol.) beträgt.

4. Getränk nach einem oder mehreren der Patentansprüche 1 bis 3, **dadurch gekennzeichnet, dass** es Alkohol aus gereiftem Weindestillat oder ganz oder teilweise in Form von Obst- und/oder Getreidebränden, Ethylalkohol anderen landwirtschaftlichen Ursprungs und/oder Alkohol aus der alkoholischen Gärung von Fruchtsäften enthält.

5. Getränk nach einem oder mehreren der Patentansprüche 1 bis 4, **dadurch gekennzeichnet, dass** das Coffein in Form von reinem Coffein oder wässrigen und/oder alkoholischen Extrakten koffeinhaltiger Pflanzen, ausgenommen Kaffee-Extrakt, vorliegt.

6. Getränk nach Patentanspruch 5, **dadurch gekennzeichnet, dass** der Extrakt Guaranä-Extrakt oder Colanuss-Extrakt ist.

7. Getränk nach einem oder mehreren der Patentansprüche 1 bis 6, **dadurch gekennzeichnet, dass** es natürlich und/oder naturidentische Aromen enthält.

8. Getränk nach einem oder mehreren der Patentansprüche 1 bis 7, **dadurch gekennzeichnet, dass** es Genusssäuren enthält.

9. Getränk nach einem oder mehreren der Patentansprüche 1 bis 8, **dadurch gekennzeichnet, dass** es färbende Zusätze enthält.

10. Getränk nach einem oder mehreren der Patentansprüche 1 bis 9, **dadurch gekennzeichnet, dass** es carbonisiert ist.

11. Verfahren zur Herstellung eines kaffeefreien Getränks mit anregender Wirkung nach Anspruch 1, **dadurch gekennzeichnet, dass** man Süßungsmittel, gegebenenfalls wässrige Frucht- und/oder Gewürzauszüge sowie gegebenenfalls weitere wasserlösliche Zusätze in einer Teilmenge Wasser löst, diese Losung mit in einer weiteren Teilmenge Wasser gelöstem Coffein versetzt, der erhaltenen Mischung das restliche Wasser, den Alkohol sowie gegebenenfalls alkoholische Fruchtund/oder Gewürzauszüge zusetzt, die erhaltene Mischung unter Vermeidung von Lufteinschlag bis zur vollständigen Durchmischung rührt und das erhaltene Getränk gegebenenfalls vor oder nach der Abfüllung in geeignete Gebinde einer Haltbarmachung unterwirft.

12. Verfahren nach Anspruch 11, **dadurch gekennzeichnet, dass** man die Haltbarmachung unter Anwendung physikalischer Verfahren, vorzugsweise durch Wärmebehandlung, oder mit Konservierungsmitteln durchführt.

13. Verfahren nach Patentanspruch 11 oder 12, **dadurch gekennzeichnet, dass** man farbintensive Zusätze vor der Zugabe ganz oder teilweise entfärbt.

14. Verfahren nach einem oder mehreren der Patentansprüche 11 bis 13, **dadurch gekennzeichnet, dass** man säurehaltige Zusätze vor der Zugabe ganz oder teilweise entsäuert

## Claims

1. A coffee-free beverage of stimulating effect comprising water, sweeteners, fruit and/or condiment extracts, and usual accessories and additives, **characterized by** a colour value of 0.1, a coffee content in an amount from 0,015 to 0.2 % (w./v.) and a percentage of alcohol from 5 % to 36 %.

2. The beverage of claim 1, **characterized in that** said percentage of alcohol is from 10 % to 30 % by volume, preferably from 13 % to 25 % by volume, and the caffeine content is from 0.025 % to 0.1 % (w./v.).

3. The beverage according to one of claims 1 or 2, **characterized in that** the amount of said sweeteners is up to 10 % (w./v.), at most.

4. The beverage according to one or several of claims 1 to 3, **characterized in that** it comprises alcohol derived from ripened vinous distillate or totally or partially in the form of fruit and/or grain brandies, ethanol of another agricultural origine, and/or ethanol derived from an alcoholic fermentation of fruit juices.

5. The beverage according to one or several of claims 1 to 4, **characterized in that** the caffeine is present in the form of pure caffeine or aqueous and/or alcoholic extracts of caffeine-containing plants, with the exception of coffee extract.

6. The beverage of claim 5, **characterized in that** the extract is an extract of guarana or cola nut.

7. The beverage according to one or several of claims 1 to 6, **characterized in that** it comprises natural and/or nature-identical flavouring substances.

8. The beverage according to one or several of claims 1 to 7, **characterized in that** it comprises stimulant acids.

9. The beverage according to one or several of claims 1 to 8, **characterized in that** it comprises colouring additives.

10. The beverage according to one or several of claims 1 to 8, **characterized in that** it carbonized.

11. A method for the production of a coffee-free beverage of stimulating effect according to claim 1, **characterized in that** sweeteners, possibly aqueous fruit and/or condiment extracts and possibly further water-soluble additives are dissolved in a subportion of water, caffeine dissolved in a further subportion of water is added to said solutiom, the remaining water, said alcohol and possibly alcoholic fruit and/or condiment extracts are added to the resultant mixture, the resultant mixture ist stirred until it is totally mingled while avoiding trapping of air, and the beverage thus obtained is subjected to a preservation process before or after being filled into suitable containers.

12. The method of claim 11, **characterized in that** said preservation is realized by the use of physical methods, preferably by the use of a heat tratment, or by preserving agents.

13. The method of claim 11 or 12, **characterized in that**, before being added, deeply coloured addives are declourized totally or partially.

14. The method of one or several of claims 11 to 13, **characterized in that**, before being added, acidic additives are deacidified totally or partially.

## Revendications

1. Boisson sans café d'un effet stimulant qui contient d'eau, d'alcool, d'agents d'adoucissement, d'extraits de fruits ou d'épices, et d' accessoires et d'additifs usuels, **caractérisée par** un indice de couleurs jusqu'à 0,1, par une teneur en caféine d'une quantité de 0,015 à 0,2 % (poids/volume) et par une teneur en alcool de 5 à 36 % volumétriques.

2. Boisson selon la revendication 1, **caractérisée en ce que** la teneur en alcool est de 10 à 30 % volumétriques, de préférence de 15 à 25 % volumétriques, et la teneur en caféine est de 0,025 à 0,1 % (poids/volume).

3. Boisson selon une des revendications 1 ou 2, **caractérisée en ce que** la teneur en agents d'adoucissement va jusqu'à 10 % (poids/volume), au maximum.

4. Boisson selon une ou plusieurs des revendications 1 à 3, **caractérisée en ce qu'**elle comporte d'alcool d'un distillat de vins ou en tout ou partie sous forme d'eau-de-vis de fruits et/ou de grains, d'alcool d'un autre origine agcricole et/ou d'alcool d'une fermantation alcoolique de jus de fruits.

5. Boisson selon une ou plusieurs des revendications 1 à 4, **caractérisée en ce que** la caféine se présente sous forme de caféine pure ou sous forme d'extraits aqueux et/ou alcooliques de plantes qui contiennent de la caféine, à l'exception du café soluble.

6. Boisson selon la revendication 5, **caractérisée en ce que** que l'extrait est un extrait de guara ou de noix de cola.

7. Boisson selon une ou plusieurs des revendications 1 à 6, **caractérisée en ce qu'**elle comporte des arômes naturels et/ou identiques à la nature.

8. Boisson selon une ou plusieurs des revendications 1 à 7, **caractérisée en ce qu'**elle comporte des acides stimulants.

9. Boisson selon une ou plusieurs des revendications 1 à 8, **caractérisée en ce qu'**elle comporte des additfs colorants.

10. Boisson selon une ou plusieurs des revendications 1 à 9, **caractérisée en ce qu'**elle est carbonisée.

11. Procédé pour la production d'une boisson sans café d'un effet stimulant selon la revendication 1, **caractérisée en ce que** l'on dissout des agents d'adoucissement, éventuellement des extraits de fruits et/ou d'épices aqueux et, éventuellement, des additifs supplémentaires solubles dans l'eau dans une quantité partielle de l'eau, on mélange cette solution avec la caféine dissoute dans une quantité partielle supplémentaire de l'eau, on ajoute l'eau de reste, l'alcool et, éventuellement, des extraits de fruits et/ou d'épices alcooliques à la mixture obtenue, on agite la mixture obtenue en évitant la rentrée de l'air jusqu'à un mélange intime total, et l'on soumet la boisson obtenue à une conservation, éventuellement avant ou après sa mise en récipients appropriés

12. Procédé selon la revendication 11, **caractérisé en ce que** l'on réalise laconservation en utilisant des méthodes physiques, de préférence un traitement thermique, ou à l'aide d'agents conservateurs.

13. Procédé selon les revendication 11 ou 12, **caractérisé en ce que** l'on décolore des additifs fortement colorés totalement ou partiellement avant son addition.

14. Procédé selon une ou plusieurs des revendications 11 à 13, **caractérisé en ce que** l'on désacidifie des additifs acidifères totalement ou partiellement avant son addition.
